# EUROPÄISCHE PATENTSCHRIFT

(11) **EP 3 875 550 B1**
(45) Veröffentlichungstag und Bekanntmachung des Hinweises auf die Patenterteilung: **20.09.2023**
(21) Anmeldenummer: 21158297.8
(22) Anmeldetag: 19.02.2021
(51) Int. Cl.: C09D 9/00

(54) **ENTLACKUNGSMITTEL UND VERFAHREN ZUM ENTLACKEN VON GEGENSTÄNDEN**
PAINT STRIPPING AGENT AND METHOD FOR STRIPPING PAINT FROM OBJECTS
DÉCAPANT ET PROCÉDÉ DE DÉCAPAGE DES OBJETS

(30) Priorität: 19.02.2020 DE 102020104348
(43) Veröffentlichungstag der Anmeldung: 08.09.2021
(73) Patentinhaber: ABL-TECHNIC Entlackung GmbH, 88299 Leutkirch/Allgäu (DE)
(72) Erfinder: BECK, Daniel, 88131 Lindau (DE)
(74) Vertreter: Cohausz & Florack

(56) Entgegenhaltungen:
- EP-A2- 0 124 849
- WO-A1-2009/151568
- WO-A2-2008/106684

## Beschreibung

Die vorliegende Erfindung betrifft ein Entlackungsmittel zum Entlacken von Gegenständen, ein Verfahren zum Entlacken von Gegenständen, sowie die Verwendung eines Entlackungsmittels zum Entlacken von Gegenständen.

Bei Beschädigung von bestimmten lackierten Gegenständen wie Maschinen- und Fahrzeugteilen infolge Gebrauchs kann eine Neulackierung, etwa zur Verhinderung von Rostangriffen und/oder aus ästhetischen Gründen, erforderlich werden. Diese erfordert in der Regel eine vorherige Entlackung des Gegenstands, d.h. eine vollständige Entfernung der alten Lackschicht. Auch bei der Neuproduktion von lackierten Gegenständen, beispielsweise bei der Produktion von lackierten Autofelgen, kann eine vollständige Entlackung erforderlich werden, etwa bei Fehllackierungen (Ausschussware). Gerade bei hochwertigen Werkstücken ist das vollständige Entlacken und Neulackieren ökonomisch und ökologisch sinnvoll. Insbesondere bei mehrlagigen Lacken ist das vollständige Entlacken anspruchsvoll und zeitaufwendig.

Aus dem Stand der Technik sind unterschiedliche Verfahren zum Entlacken von Gegenständen bekannt. Je nach Material, Größe und Beschaffenheit des Gegenstandes werden chemische, mechanische, thermische oder kryogene Entlackungsverfahren, Entlackungsverfahren unter Verwendung von Laserlicht oder Entlackungsverfahren unter Verwendung von Wasserhochdruck verwendet.

Chemische Entlackungsverfahren eignen sich vor allem bei temperaturempfindlichen Werkstücken und Lacken. Es werden alkalische Entlackungsmittel, saure Entlackungsmittel und organische Lösemittel zur Entlackung verwendet.

Die Entlackungswirkung von organischen Entlackungsmitteln und alkalischen bzw. sauren Entlackungsmitteln basiert auf zwei unterschiedlichen Wirkmechanismen. Organische Entlackungsmittel diffundieren in die Lackschichten ein, quellen diese und führen so zu einem Aufplatzen und Abblättern der Lackschichten. Alkalische und saure Entlackungsmittel reagieren chemisch mit den Bindersystemen des Lacks und spalten diese so chemisch auf.

Die EP 1 989 266 B1 beschreibt ein Verfahren zum Entlacken von Gegenständen, wobei im ersten Schritt ein Entlackungsmittel enthaltend substituiertes oder unsubstituiertes Methylpyrollidon und im zweiten Schritt ein Entlackungsmittel enthaltend Glykolether und alkalisch wirkende Verbindungen verwendet werden. Methylpyrollidon ist jedoch unter REACH als besonders besorgniserregend und fortpflanzungsgefährdend klassifiziert und daher insbesondere aus Arbeitsschutzgründen problematisch in der Anwendung.

Den aus dem Stand der Technik bekannten Verfahren und Entlackungsmitteln ist gemein, dass die verwendeten Verbindungen auf Grund ihrer Flüchtigkeit und ihrer chemischen Eigenschaften eine Gesundheitsgefährdung für die mit der Entlackung beschäftigten Personen darstellen. Nachteilig an den aus dem Stand der Technik bekannten Entlackungsmitteln und Verfahren ist ferner, dass sie häufig eine lange Behandlungszeit voraussetzen oder zu einer nicht-vollständigen Entlackung der zu entlackenden Gegenstände führen.

Die WO 2008/106684 A2 beschreibt eine Zusammensetzung zur Entfernung von Beschichtungen, die mindestens ein schwaches Metallbindemittel und ein Lösungsmittelsystem, das mindestens einen Alkohol oder Ester und ein Korrosionshemmungssystem enthält.

Die EP 0 124 849 A2 beschreibt flüssige, lösungsmittelfreie, wässrige Mittel zur Entfernung filmbildender polymerer Schutzüberzüge, die eine Kombination aus Alkanolaminen und als Lösungsvermittler wirkende Substanzen sowie gegebenenfalls pH-Wert regulierende Säuren, Verdickungsmittel, Tenside, Korrosionsinhibitoren, Biozide und/oder Farbstoffe enthalten.

Die WO 2009/151568 A1 beschreibt eine Kombination aus einem oligomeren Ölstrukturierungsmittel, das Urethan und/oder Harnstoffbindungen und Reste einer Dimer- und/oder Trimerkomponente umfasst, sowie einen Wasserstoffbindungsinterruptor.

Aufgabe der Erfindung war es daher, ein Entlackungsmittel zum Entlacken von Gegenständen bereitzustellen, das einen oder mehrere der Nachteile des Stands der Technik zumindest teilweise überwindet. Dabei soll das Entlackungsmittel für möglichst vollständige Entlackung der zu entlackenden Gegenstände geeignet sein. Ferner soll das Entlackungsmittel eine Entlackung der zu entlackenden Gegenstände in möglichst kurzer Zeit ermöglichen. Weiterhin soll das Entlackungsmittel eine möglichst effiziente Entlackung der zu entlackenden Gegenstände ermöglichen.

Schließlich soll das Entlackungsmittel möglichst wenig flüchtig und möglichst wenig gesundheitsgefährdend sein.

Eine weitere Aufgabe der vorliegenden Erfindung war es, ein Verfahren bereitzustellen, mit dem Gegenstände besonders vollständig, effizient und in kurzer Zeit entlackt werden können. Insbesondere soll sich das Verfahren für die industrielle Entlackung eignen.

Alle oder einige dieser Aufgaben werden erfindungsgemäß durch ein Entlackungsmittel gemäß Anspruch 1, ein Entlackungsmittel gemäß Anspruch 10, ein Verfahren gemäß Anspruch 11 sowie eine Verwendung gemäß Anspruch 16 gelöst.

Vorteilhafte Ausgestaltungen der Erfindung sind in den abhängigen Ansprüchen angegeben und werden nachfolgend im Einzelnen erläutert.

Die Erfindung stellt ein Entlackungsmittel zum Entlacken von Gegenständen bereit, wobei das Entlackungsmittel mindestens a) einen substituierten oder unsubstituierten Hydroxyalkyl-Aryl-Ether mit 7 bis 20 Kohlenstoffatomen, wobei der Hydroxyalkyl-Rest des Hydroxyalkyl-Aryl-Ethers ausgewählt ist aus Hydroxymethyl, Hydroxyethyl und Hydroxypropyl, sowie eine Mischung davon, b) Säure sowie c) Wasser enthält, wobei das Entlackungsmittel einen pH-Wert von 0 bis 7 aufweist.

Es hat sich gezeigt, dass das erfindungsgemäße Entlackungsmittel Gegenstände schnell und bis zu einem hohen Anteil entlacken kann. Überraschend wurde dabei gefunden, dass mit einem substituierten oder unsubstituierten Hydroxyalkyl-Aryl-Ether mit 7 bis 20 Kohlenstoffatomen in saurer wässriger Lösung eine schnelle Entlackung und ein hoher Entlackungsanteil bis hin zu vollständiger Entlackung erreicht werden.

Ohne an eine bestimmte wissenschaftliche Theorie gebunden sein zu wollen, scheint sich diese überraschende Wirkung dadurch erklären zu lassen, dass der substituierte oder unsubstituierte Hydroxyalkyl-Aryl-Ether mit 7 bis 20 Kohlenstoffatomen überraschend gut in die Lackschicht eindiffundieren kann und so zu einem Abblättern des Lacks führt. Gleichzeitig scheint der Hydroxyalkyl-Aryl-Ether in der Lage zu sein, Weichmacher aus dem Lack herauszulösen und so ein weiteres Hineindiffundieren der Entlackungsmittel-Bestandteile zu ermöglichen. Weiterhin scheint der Hydroxyalkyl-Aryl-Ether in der Lage zu sein mit der Säure einen Ester zu bilden, welcher zusätzlich überraschend gute Entlackungseigenschaften entfaltet. Obwohl der Hydroxyalkyl-Aryl-Ether mit 7 bis 20 Kohlenstoffatomen relativ groß und sterisch anspruchsvoll ist, ist dieser in der Lage, in den Lack hineinzudiffundieren, Weichmacher aus dem Lack zu lösen und eine zügige Entlackung mit einem hohen Entlackungsanteil zu ermöglichen.

Der Begriff "Entlackungsmittel" bezeichnet hierin insbesondere eine chemische Zusammensetzung, welche in der Lage ist Gegenstände zu entlacken. "Entlacken" und "Entlackung" werden synonym verwendet und bezeichnen hierin insbesondere chemisches Entlacken, also das Abtrennen von Farben, Lacken, Pulverlacken und anderen organischen Verbindungen von insbesondere metallischen Bauteilen unter Verwendung von chemischen Entlackungsmitteln. Beispiele für solche Lacke sind Alkydharz-Lacke, Acrylharz-Lacke, Nitrolacke, Epoxidharz-Lacke, Polyesterharz-Lacke, Phenolharz-Lacke, Melaminharz-Lacke und Polyisocyanatlacke. Sowohl einschichtige als auch mehrschichtige Lacke können entfernt werden. Insbesondere können auch KTL-Beschichtungen (kathodische Tauchlackierung) und/oder Pulverlacke, insbesondere organische duroplastische Pulverlacke, wie Epoxid-Pulverlacke, Polyester-Pulverlacke, Polyurethan-Pulverlacke, Acrylat-Pulverlacke sowie deren Mischungen entfernt werden.

Wie ausgeführt beinhaltet das erfindungsgemäße Entlackungsmittel zunächst einen substituierten oder unsubstituierten Hydroxyalkyl-Aryl-Ether mit 7 bis 20 Kohlenstoffatomen. Der Begriff "Hydroxyalkyl-Aryl-Ether" wie hier verwendet bezeichnet insbesondere eine organische Verbindung, bei der ein Hydroxyalkyl-Rest und ein Aryl-Rest über ein Sauerstoffatom miteinander verbunden sind. Ein "Hydroxyalkyl-Rest" bezeichnet hier insbesondere eine Kohlenwasserstoffgruppe, welche mindestens eine Hydroxy-Gruppe (OH-Gruppe) umfasst. Die Kohlenwasserstoffgruppe kann verzweigt oder unverzweigt sein. Ein "Aryl-Rest" bezeichnet hier insbesondere einen organisch-chemischen Rest mit einem aromatischen Grundgerüst. "Substituiert oder unsubstituiert" bedeutet hier insbesondere, dass eines oder mehr Wasserstoffatome des Aryl-Rests und/oder des Hydroxyalkyl-Rests durch andere Atomgruppen ersetzt sein können.

Der Hydroxyalkyl-Aryl-Ether des erfindungsgemäßen Entlackungsmittels kann 8 bis 15, insbesondere 8 bis 12 oder 8 Kohlenstoffatome, aufweisen. Ein Hydroxyalkyl-Aryl-Ether mit einer solchen Anzahl an Kohlenstoffatomen zeichnet sich durch seine Sterik aus, die ein besonders gutes Hineindiffundieren des Hydroxyalkyl-Aryl-Ethers in den Lack ermöglicht und dadurch ein vollständiges Ablösen und Abblättern des Lacks vom Gegenstand befördert. Zu viele Kohlenstoffatome verhindern, dass der Hydroxyalkyl-Aryl-Ether in den Lack eindiffundieren kann und verschlechtern dadurch die Entlackungseigenschaften drastisch.

Gemäß einer bevorzugten Ausführungsform des erfindungsgemäßen Entlackungsmittels ist der Hydroxyalkyl-Rest des Hydroxyalkyl-Aryl-Ethers ein Monohydroxyalkyl und/oder Dihydroxyalkyl. Zusätzliche Hydroxygruppen erhöhen die räumlichen Ansprüche des Hydroxyalkyl-Aryl-Ethers und lassen ihn dadurch reaktionsträge werden. Dadurch werden die Entlackungseigenschaften verschlechtert. Gemäß einer besonders bevorzugten Ausführungsform ist der Hydroxyalkyl-Rest des Hydroxyalkyl-Aryl-Ethers Hydroxyethyl. Solche Hydroxyalkyl-Reste zeigen eine besonders gute Reaktivität mit der Säure und fördern eine vollständige, zügige und gleichmäßige Entlackung.

Gemäß einer weiteren bevorzugten Ausführungsform des erfindungsgemäßen Entlackungsmittels ist der Aryl-Rest des Hydroxyalkyl-Aryl-Ethers ausgewählt aus Phenyl, Naphthyl und Benzyl, sowie Mischungen davon, insbesondere Phenyl. Solche verhältnismäßig kleinen aromatischen Systeme ermöglichen ein Hineindiffundieren des Hydroxyalkyl-Aryl-Ethers in den Lack und sorgen so für optimale Entlackungseigenschaften.

Beispiele für Hydroxyalkyl-Aryl-Ether im erfindungsgemäßen Entlackungsmittel sind Phenoxyethanol, 2-Phenoxypropanol, 1-Phenoxy-2-propanol, 3-Phenoxy-1,2-propandiol, 4-(2-Hydroxyethoxy)toluol, 2-(Benzyloxy)ethanol, 2-Benzyloxy-1-propanol, 3-Benzyloxy-1-propanol und 2-(2-Naphtoxy)ethanol.

Gemäß einer besonders bevorzugten Ausführungsform des erfindungsgemäßen Entlackungsmittels ist der Hydroxyalkyl-Aryl-Ether im Wesentlichen Phenoxyethanol. Auf diese Weise ist das Entlackungsmittel für eine möglichst vollständige Entlackung der zu entlackenden Gegenstände geeignet. Ferner ermöglicht solch ein Entlackungsmittel eine Entlackung der zu entlackenden Gegenstände in kurzer Zeit. Phenoxyethanol verfügt über einen niedrigen Dampfdruck und einen hohen Siedepunkt und ist daher nicht flüchtig und wenig gesundheitsgefährdend.

Gemäß einer bevorzugten Ausführungsform der Erfindung enthält das erfindungsgemäße Entlackungsmittel einen substituierten oder unsubstituierten Hydroxyalkyl-Aryl-Ether mit 7 bis 20 Kohlenstoffatomen in einer Menge von 5 bis 30 Gew.%, insbesondere 10 bis 25 Gew.% oder 15 bis 20 Gew.%, bezogen auf das Gesamtgewicht des Entlackungsmittels.

Neben dem substituierten oder unsubstituierten Hydroxyalkyl-Aryl-Ether mit 7 bis 20 Kohlenstoffatomen enthält das erfindungsgemäße Entlackungsmittel Säure. Unter dem Begriff "Säure" wie hier verwendet wird insbesondere eine chemische Verbindung verstanden, die in der Lage ist Protonen (H⁺) an einen Reaktionspartner zu übertragen. Säure kann zu einer vollständigen Entlackung beitragen, indem sie mit den organischen Komponenten des Lacks reagiert und diese chemisch löst. Weiterhin kann Säure mit dem substituierten oder unsubstituierten Hydroxyalkyl-Aryl-Ether zu einem Ester reagieren, der die Entlackungseigenschaften des Entlackungsmittels weiter verbessert.

Als Säure kann grundsätzlich jede organische oder anorganische Säure verwendet werden. Bevorzugt wird als Säure eine organische Säure verwendet. Insbesondere kann eine organische Säure verwendet werden, welche mindestens eine Carboxylgruppe aufweist und deren pKs-Wert 0 bis 6, insbesondere 1 bis 5 oder 2 bis 4, beträgt und/oder eine Sulfonsäure. Wenn die Säure eine organische Säure ist, die mindestens eine Carboxylgruppe aufweist, kann die Säure zusammen mit dem Hydroxyalkyl-Aryl-Ether zu einem Ester reagieren. Dieser Ester kann die Weichmacher im Lack lösen und trägt so zu verbesserten Entlackungseigenschaften bei. Weiterhin kann die organische Säure, die mindestens eine Carboxylgruppe aufweist, deren pKs-Wert 0 bis 6, insbesondere 1 bis 5 oder 2 bis 4 beträgt, chemisch mit dem Bindersystem des Lacks reagieren und so zu besonders guter Entlackung beitragen. Ein höherer pKs-Wert führt zu weniger freien Protonen und damit zu einem geringeren Beitrag der Säure zur chemischen Entlackung. Ein niedrigerer pKs-Wert führt zu einer hohen Acidität und somit dazu, dass die Säure den zu entlackenden Gegenstand angreifen und die anderen Bestandteile des Entlackungsmittels zersetzen kann.

Gemäß einer bevorzugten Ausführungsform des erfindungsgemäßen Entlackungsmittels ist die Säure eine Hydroxy-Carbonsäure und/oder Dicarbonsäure und/oder eine Sulfonsäure, insbesondere eine Hydroxy-Carbonsäure und/oder Dicarbonsäure mit 2 bis 12 Kohlenstoffatomen, insbesondere 2 bis 10, 3 bis 6 oder 6 bis 8 Kohlenstoffatomen und/oder eine Sulfonsäure.

Gemäß einer besonders bevorzugten Ausführungsform des erfindungsgemäßen Entlackungsmittels ist die Säure ausgewählt aus Milchsäure, Citronensäure, Salicylsäure, Ethandisäure, Propandisäure und Sulfonsäure, sowie Mischungen davon, insbesondere Milchsäure, einer Mischung aus Milchsäure und Citronensäure, einer Mischung aus Milchsäure und Salicylsäure, einer Mischung aus Milchsäure, Citronensäure und Salicylsäure und einer Mischung aus Milchsäure und Sulfonsäure. Versuche haben gezeigt, dass Entlackungsmittel mit diesen Säuren über besonders gute Entlackungseigenschaften verfügen. Dies liegt vermutlich daran, dass diese Säuren sowohl chemisch mit dem Bindersystem des Lacks reagieren, als auch einen Ester mit dem Hydroxyalkyl-Aryl-Ether bilden, der zur weiteren Verbesserung der Entlackungseigenschaften beiträgt.

Bevorzugt ist die Sulfonsäure eine Alkansulfonsäure und/oder aromatische Sulfonsäure, insbesondere eine Alkansulfonsäure mit 1 bis 8, insbesondere 1 bis 6 oder 1 bis 4 Kohlenstoffatomen, und/oder eine aromatische Sulfonsäure mit 6 bis 12, insbesondere 6 bis 10 oder 6 bis 8 Kohlenstoffatomen. Besonders bevorzugt ist die Sulfonsäure ausgewählt aus Benzolsulfonsäure, Methansulfonsäure und Toluol-4-sulfonsäure, sowie Mischungen davon, insbesondere Methansulfonsäure. Es hat sich als besonders vorteilhaft herausgestellt, dass ein Entlackungsmittel mit Sulfonsäure zu einer besonders guten Entlackung, einer hohen Effizienz und einer Verringerung der Entlackungszeit führt. Dadurch kann eine höhere Anzahl an zu entlackenden Gegenständen, wie Felgen, pro Zeiteinheit entlackt werden. Insbesondere können so auch schwierig zu entfernende Lacke wie Mischlacke in einem einzigen Entlackungsschritt von der zu entlackenden Oberfläche entfernt werden, ohne dass eine Vorbehandlung, etwa mit Schwefelsäure, erforderlich ist. Ferner verringern solche Sulfonsäuren, insbesondere Methansulfonsäure, die Schaumbildung, vor allem wenn das Entlackungsmittel in einem Sprühverfahren eingesetzt wird. Schließlich können durch die Sulfonsäure im Entlackungsmittel Ablagerungen vermieden werden.

Bevorzugt ist die Sulfonsäure in einer Menge von 0,01 bis 5 Gew.%, insbesondere 0,05 bis 3 Gew.% oder 0,1 bis 1 Gew.%, jeweils bezogen auf das Gesamtgewicht des Entlackungsmittels, im Entlackungsmittel enthalten. Eine größere Menge an Sulfonsäure im Entlackungsmittel kann dazu führen, dass die zu entlackende Oberfläche, beispielsweise aus Aluminium, angegriffen wird.

Eine besonders bevorzugte Ausführungsform des erfindungsgemäßen Entlackungsmittels ist ein Entlackungsmittel, das, jeweils bezogen auf das Gesamtgewicht des Entlackungsmittels,
a) 5 bis 30 Gew.%, insbesondere 10 bis 25 Gew.% oder 15 bis 20 Gew.%, Hydroxyalkyl-Aryl-Ether,
b1) 0,99 bis 14,99 Gew.%, insbesondere 2,95 bis 11,95 Gew.% oder 4,9 bis 9,9 Gew.%, organische Säure, die mindestens eine Carboxylgruppe aufweist, deren pKs-Wert 0 bis 6, insbesondere 1 bis 5 oder 2 bis 4, beträgt,
b2) 0,01 bis 5 Gew.%, insbesondere 0,05 bis 3 Gew.% oder 0,1 bis 1 Gew.% Sulfonsäure, und
c) 52,5 bis 94 Gew.%, insbesondere 61 bis 87 Gew.% oder 68,5 bis 80 Gew.%, Wasser,
enthält, wobei nicht mehr als 15 Gew.%, insbesondere nicht mehr als 12 Gew.% oder nicht mehr als 10 Gew.% Säure im Entlackungsmittel enthalten sind.

Besonders bevorzugt ist die organische Säure, die mindestens eine Carboxylgruppe aufweist, deren pKs-Wert 0 bis 6, insbesondere 1 bis 5 oder 2 bis 4, beträgt, Milchsäure und/oder die Sulfonsäure Methansulfonsäure, insbesondere ist die organische Säure, die mindestens eine Carboxylgruppe aufweist, deren pKs-Wert 0 bis 6, insbesondere 1 bis 5 oder 2 bis 4, beträgt, Milchsäure und die Sulfonsäure Methansulfonsäure.

Gemäß einer besonders bevorzugten Ausführungsform der Erfindung enthält das erfindungsgemäße Entlackungsmittel, jeweils bezogen auf das Gesamtgewicht des Entlackungsmittels,
a) 10 bis 20 Gew.% Hydroxyalkyl-Aryl-Ether, insbesondere Phenoxyethanol,
b1) 0,99 bis 5 Gew.%, organische Säure, die mindestens eine Carboxylgruppe aufweist, deren pKs-Wert 0 bis 6, insbesondere 1 bis 5 oder 2 bis 4, beträgt, insbesondere Milchsäure,
b2) 0,1 bis 1 Gew.%, Sulfonsäure, insbesondere Methansulfonsäure, und
c) 74 bis 89 Gew.%, Wasser.

Gemäß einer bevorzugten Ausführungsform der Erfindung enthält das erfindungsgemäße Entlackungsmittel Säure in einer Menge von 1 bis 15 Gew.%, insbesondere 3 bis 12 Gew.% oder 5 bis 10 Gew.%, bezogen auf das Gesamtgewicht des Entlackungsmittels.

Weiterhin enthält das erfindungsgemäße Entlackungsmittel Wasser. Wasser dient hier als Trägermittel, um die anderen Komponenten des Entlackungsmittels zu lösen und für eine homogene Verteilung der Komponenten im Entlackungsmittel zu sorgen.

Gemäß einer bevorzugten Ausführungsform der Erfindung enthält das erfindungsgemäße Entlackungsmittel Wasser in einer Menge von 52,5 bis 94 Gew.%, insbesondere 61 bis 87 Gew.% oder 68,5 bis 80 Gew.%,, bezogen auf das Gesamtgewicht des Entlackungsmittels.

Gemäß einer besonders bevorzugten Ausführungsform der Erfindung enthält das erfindungsgemäße Entlackungsmittel, jeweils bezogen auf das Gesamtgewicht des Entlackungsmittels,
a) 15 bis 20 Gew.%, Hydroxyalkyl-Aryl-Ether,
b) 5 bis 10 Gew.%, Säure, und
c) 68,5 bis 80 Gew.%, Wasser

Eine solche Zusammensetzung ist besonders geeignet, um eine vollständige und zügige Entlackung zu erreichen.

Das erfindungsgemäße Entlackungsmittel kann einen Korrosionsinhibitor in einer Menge von 0,1 bis 1 Gew.%, insbesondere 0,2 bis 0,8 Gew.% oder 0,4 bis 0,6 Gew.%, jeweils bezogen auf das Gesamtgewicht des Entlackungsmittels, enthalten. Ein Korrosionsinhibitor verhindert, dass ein entlackter Gegenstand rostet und korrodiert. Zu geringe Mengen an Korrosionsinhibitor, verringern den Schutzeffekt. Zu hohe Mengen an Korrosionsinhibitor verschlechtern die Entlackungseigenschaften des Entlackungsmittels und sorgen daher für längere Behandlungszeiten und unvollständige Entlackung.

Gemäß einer bevorzugten Ausführungsform des erfindungsgemäßen Entlackungsmittels ist der Korrosionsinhibitor ausgewählt aus Benzotriazol, N,N'-Diethylthioharnstoff, 1H-Imdiazol-1-ethanol und 1-Methyl-1H-benzotriazol, sowie Mischungen davon. Benzotriazol ist ein besonders geeigneter Korrosionsinhibitor. Die genannten Korrosionsinhibitoren können Korrosion und Rosten besonders gut verhindern.

Gemäß einer weiteren bevorzugten Ausführungsform des erfindungsgemäßen Entlackungsmittels enthält das Entlackungsmittel 0,01 bis 20 Gew.% eines aus Säure und Hydroxyalkyl-Aryl-Ether bildbaren Esters, insbesondere 0,1 bis 15 Gew.% oder 0,5 bis 10 Gew.%, jeweils bezogen auf das Gesamtgewicht des Entlackungsmittels. Ein solcher Ester sorgt für verbesserte Entlackungseigenschaften. Einerseits kann der Ester Weichmacher aus dem Lack lösen, und somit das Hineindiffundieren der Bestandteile des Entlackungsmittels erleichtern. Gleichzeitig kann der Ester selbst in den Lack hineindiffundieren und so zum Entlacken des zu entlackenden Gegenstandes beitragen.

Gemäß einer weiteren bevorzugten Ausführungsform des erfindungsgemäßen Entlackungsmittels weist das Entlackungsmittel einen pH-Wert von 0,5 bis 4 oder von 1 bis 3 auf. In diesem Bereich stellen sich optimale Ergebnisse bezüglich der Entlackungszeit und des Entlackungsgrads ein. Bei einem solchen pH-Wert findet zudem eine Bildung des aus Säure und Hydroxyalkyl-Aryl-Ether bildbaren Esters statt. Ein höherer pH-Wert führt zu weniger freien Protonen und damit zu einem geringeren Beitrag der Protonen zur chemischen Spaltung des Bindersystems des Lacks und zu einer geringen Bildungsrate des aus

Säure und Hydroxyalkyl-Aryl-Ether bildbaren Esters. Ein niedrigerer pH-Wert führt zu einer hohen Acidität und somit dazu, dass die Protonen den zu entlackenden Gegenstand angreifen und die Bestandteile des Entlackungsmittels zersetzen können.

Gemäß einer weiteren bevorzugten Ausführungsform des erfindungsgemäßen Entlackungsmittels ist das Entlackungsmittel bei 23 °C flüssig. Dies führt dazu, dass das Entlacken von Gegenständen mit dem erfindungsgemäßen Entlackungsmittel bei Raumtemperatur in Tauchverfahren und/oder flüssigen Sprühverfahren durchgeführt werden kann.

Gegenstand der Erfindung ist ferner ein erfindungsgemäßes Entlackungsmittel zum Entlacken von Gegenständen, welches herstellbar ist durch Mischen von mindestens einer Säure, eines substituierten oder unsubstituierten Hydroxyalkyl-Aryl-Ethers mit 7 bis 20 Kohlenstoffatomen und Wasser. In einer bevorzugten Ausführungsform gilt für das Entlackungsmittel, die Säure und/oder den Hydroxyalkyl-Aryl-Ether das vorstehend Gesagte analog.

Gegenstand der Erfindung ist ferner ein Verfahren zum Entlacken von Gegenständen, mindestens umfassend den folgenden Schritt:
a) Inkontaktbringen der zu entlackenden Oberfläche des Gegenstands mit einem ersten Entlackungsmittel.

Für das erste Entlackungsmittel des erfindungsgemäßen Verfahrens gilt das vorstehend zum erfindungsgemäßen Entlackungsmittel Gesagte analog.

Mit dem erfindungsgemäßen Verfahren kann das Entlacken von Gegenständen besonders vollständig und in kurzer Zeit stattfinden.

Gemäß einer bevorzugten Ausführungsform des erfindungsgemäßen Verfahrens erfolgt das Inkontaktbringen in Schritt a) bei Temperaturen von 75 °C bis 95 °C, insbesondere von 75 °C bis 90 °C oder 80 °C bis 85 °C. Bei diesen Temperaturen gelingt das Entlacken besonders schnell, vollständig und effizient. Bei niedrigeren Temperaturen verringert sich die Entlackungsgeschwindigkeit und die Entlackung dauert länger und gelingt weniger vollständig. Bei höheren Temperaturen kommt es zu keiner signifikanten Effizienzsteigerung der Entlackung und zu einem erhöhten Energieverbrauch.

Zusätzlich zu Schritt a) kann das Verfahren folgenden Schritt umfassen:
b) Inkontaktbringen der zu entlackenden Oberfläche des Gegenstands mit einem zweiten Entlackungsmittel, wobei das zweite Entlackungsmittel einen Glycolether enthält.

Das zusätzliche Durchführen eines solchen Verfahrensschrittes b) führt zu einem höheren Entlackungsgrad und damit zu einer vollständigeren Entlackung. Ein zweites Entlackungsmittel, welches einen Glycolether enthält kann zu einem weiteren Abtrennen des Lacks beitragen, indem es in den Lack eindiffundiert und zu einer Quellung und damit Abtrennen des Lacks führt, mit dem Lack chemisch reagiert und/oder den Lack löst.

Gemäß einer bevorzugten Ausführungsform des erfindungsgemäßen Verfahrens enthält das zweite Entlackungsmittel in Schritt b) Glycolether in einer Menge von 50 bis 99,9 Gew.%, insbesondere 90 bis 99,8 Gew.% oder 97 bis 99,7 Gew.%, jeweils bezogen auf das Gesamtgewicht des zweiten Entlackungsmittels. Ein solches Entlackungsmittel führt in Schritt b) zu einer besonders effizienten, schnellen und vollständigen Entlackung.

Gemäß einer weiteren bevorzugten Ausführungsform des erfindungsgemäßen Verfahrens enthält das zweite Entlackungsmittel in Schritt b) weiterhin Lauge in einer Menge von 0,1 bis 5 Gew.%, insbesondere 0,3 bis 3 Gew.% oder 0,5 bis 1,5 Gew.%, jeweils bezogen auf das Gesamtgewicht des zweiten Entlackungsmittels.

Unter dem Begriff Lauge wie hierin verwendet wird jede basische Verbindung verstanden, die einen pH Wert von größer 7, insbesondere größer 9 oder größer 11 aufweist. Lauge in einer solchen Menge im zweiten Entlackungsmittel führt zu einer schnelleren und vollständigeren Entlackung. Lauge kann mit dem Lack chemisch reagieren und diesen verseifen, so dass sich das Bindemittel des Lacks im zweiten Entlackungsmittel löst. Eine höhere Laugenkonzentration kann zu einem chemischen Angriff auf den zu entlackenden Gegenstand führen und diesen so verfärben.

Gemäß einer besonders bevorzugten Ausführungsform des erfindungsgemäßen Verfahrens ist der Glycolether ausgewählt aus Diethylenglycol, Triethylenglycol, Polyethylenglycol und Polypropylenglycol, sowie Mischungen davon, insbesondere Diethylenglycol. Die terminalen OH-Gruppen können durch Endgruppen, beispielsweise Alkylgruppen, verschlossen sein. Solche Glycolether sind besonders gut zum schnellen und vollständigen Entlacken geeignet.

Für das zweite Entlackungsmittel in Verfahrensschritt b) hat es sich als besonders vorteilhaft herausgestellt, wenn die Lauge ausgewählt ist aus Kaliumhydroxid, Natriumhydroxid, Ammoniumhydroxid, Natriummethanolat, Kaliummethanolat, Natriumethanolat und Kaliumethanolat, sowie Mischungen davon, insbesondere aus Kaliumhydroxid und Natriummethanolat, sowie Mischungen davon. Versuche haben gezeigt, dass diese Laugen eine besonders effiziente Entlackung ermöglichen. Diese Laugen können chemisch mit dem Lack reagieren und diesen verseifen, so dass sich das Bindemittel des Lacks im zweiten Entlackungsmittel löst. Die geringe Größe der Laugen sorgt für eine besonders hohe Reaktivität und Effizienz.

Gemäß einer bevorzugten Ausführungsform des erfindungsgemäßen Verfahrens erfolgt das Inkontaktbringen in Schritt b) bei Temperaturen von 50 bis 200 °C, insbesondere 70 bis 170 °C und 80 bis 150 °C. Bei diesen Temperaturen gelingt das Entlacken besonders schnell, vollständig und effizient. Bei niedrigeren Temperaturen verringert sich die Entlackungsgeschwindigkeit und die Entlackung dauert länger und gelingt weniger vollständig. Bei höheren Temperaturen kommt es zu keiner signifikanten Effizienzsteigerung der Entlackung und zu einem erhöhten Energieverbrauch.

Gemäß einer bevorzugten Ausführungsform des erfindungsgemäßen Verfahrens kann das Verfahren zusätzlich oder anstelle von Schritt b) folgenden Schritt umfassen:
c) Spülen des gemäß Schritt a) und/oder b) behandelten Gegenstands mit Wasser. Spülen des gemäß Schritt a) und/oder b) behandelten Gegenstands mit Wasser ist vorteilhaft, da es den behandelten Gegenstand sowohl von Lackrückständen, als auch von Chemikalienresten des ersten und/oder zweiten Entlackungsmittels reinigt. Dadurch ist ein Weiterverwenden des gespülten Gegenstandes sowohl in Bezug auf die Gesundheit, als auch in Bezug auf mögliche Folgereaktionen unproblematisch.

Gemäß einer weiteren bevorzugten Ausführungsform des erfindungsgemäßen Verfahrens kann das Verfahren zusätzlich oder anstelle von Schritt b) und/oder Schritt c) folgenden Schritt umfassen:
d) Inkontaktbringen der zu entlackenden Oberfläche des Gegenstands mit einer wässrigen Lösung enthaltend Phosphorsäure in einer Menge von 0,5 bis 10 Gew.%, insbesondere 1 bis 6 Gew.% oder 2 bis 4 Gew.%, jeweils bezogen auf das Gesamtgewicht der wässrigen Lösung.

Das Inkontaktbringen der zur entlackenden Oberfläche des Gegenstandes mit einer wässrigen Lösung enthaltend Phosphorsäure in einer Menge von 0,5 bis 10 Gew.%, insbesondere 1 bis 6 Gew.% oder 2 bis 4 Gew.%, jeweils bezogen auf das Gesamtgewicht der wässrigen Lösung ist vorteilhaft, da es den behandelten Gegenstand sowohl von Lackrückständen, als auch von Chemikalienresten des ersten und/oder zweiten Entlackungsmittels reinigt.

Gemäß einer weiteren bevorzugten Ausführungsform kann das Verfahren zusätzlich folgenden Vorbehandlungsschritt umfassen:
Inkontaktbringen der zu entlackenden Oberfläche des Gegenstands mit einer Lösung enthaltend Schwefelsäure.

Eine Vorbehandlung mit Schwefelsäure trägt zu einer vollständigen und schnellen Entlackung bei. Schwefelsäure kann chemisch mit dem Lack reagieren und diesen so von der zu entlackenden Oberfläche abtrennen. Insbesondere bei schwierig zu entlackenden Felgen und/oder Schrottfelgen, trägt ein Vorbehandlungsschritt mit Schwefelsäure zu einer vollständigen Entlackung bei.

Gemäß einer besonders bevorzugten Ausführungsform des erfindungsgemäßen Verfahrens enthält die zur Vorbehandlung verwendete Lösung Schwefelsäure in einer Menge von 80 bis 99,9 Gew.%, insbesondere 88 bis 99,5 Gew.% oder 92 bis 98,5 Gew.%, bezogen auf die Gesamtmenge der Lösung. Eine solche Menge an Schwefelsäure trägt zu einer besonders vollständigen und schnellen Entlackung bei. Eine niedrigere Menge an Schwefelsäure verringert den entlackenden Effekt der Schwefelsäure. Eine höhere Menge an Schwefelsäure kann zu einem Angriff auf die zu entlackende Oberfläche des Gegenstands führen.

Vorzugsweise wird die Vorbehandlung mit einer Lösung enthaltend Schwefelsäure vor Schritt a) durchgeführt. Durch die Vorbehandlung kommt es in Schritt a) zu einer zügigeren und vollständigeren Entlackung.

Gemäß einer bevorzugten Ausführungsform des erfindungsgemäßen Verfahrens erfolgt das Inkontaktbringen in mindestens einem Verfahrensschritt, insbesondere in sämtlichen Verfahrensschritten, mittels eines Sprühverfahrens. Ein Sprühverfahren bietet den Vorteil, dass die zu entlackende Oberfläche des Gegenstandes gleichmäßig mit den jeweiligen Entlackungsmitteln und/oder Lösungen besprüht wird. Dadurch werden eine gleichmäßige Behandlung, eine gleichmäßige Entlackung und/oder eine gleichmäßige Reinigung der jeweiligen Oberfläche ermöglicht.

Gemäß einer besonders bevorzugten Ausführungsform des erfindungsgemäßen Verfahrens erfolgt das Sprühverfahren in den Verfahrensschritten a), c) und/oder d) bei einem Sprühdruck von 0,01 bis 10 bar, insbesondere von 0,02 bis 8 bar, von 0,03 bis 5 bar, von 0,05 bis 2 bar oder von 0,1 bis 1 bar. Auch der Vorbehandlungsschritt kann bei diesen Drucken im Sprühverfahren durchgeführt werden, er wird jedoch bevorzugt im Tauchverfahren durchgeführt. In Schritt b) beträgt der Sprühdruck aufgrund des Gehalts an organischem Lösemittel vorzugsweise 0,05 bis 2 bar, insbesondere 0,1 bis 1 bar oder 0,2 bis 0,7 bar. Die genannten Sprühdrucke ermöglichen eine besonders gleichmäßige Behandlung/Entlackung des Gegenstandes. Ein zu niedriger Sprühdruck sorgt dafür, dass die Behandlung/Entlackung lediglich unvollständig stattfindet. Ein zu hoher Sprühdruck kann ein Gesundheitsrisiko für die an der Entlackung beteiligten Personen darstellen.

Gemäß einer weiteren bevorzugten Ausführungsform des erfindungsgemäßen Verfahrens erfolgt das Inkontaktbringen in mindestens einem Verfahrensschritt in einem Tauchverfahren. Ein solches Tauchverfahren sorgt dafür, dass der zu entlackende Gegenstand gleichmäßig mit dem jeweiligen Entlackungsmittel oder Behandlungsmittel benetzt wird und so ein gleichmäßiges Entlacken oder Behandeln stattfindet.

Gemäß einer besonders bevorzugten Ausführungsform des erfindungsgemäßen Verfahrens findet der Vorbehandlungsschritt des Inkontaktbringens der zu entlackenden Oberfläche des Gegenstands mit einer Lösung enthaltend Schwefelsäure in einem Tauchverfahren statt. Dadurch wird eine gleichmäßige und vollständige Vorbehandlung der zu entlackenden Oberfläche gewährleistet.

Vorzugsweise werden die einzelnen Schritte des erfindungsgemäßen Verfahrens in der angegebenen Reihenfolge durchgeführt, d.h. Schritt a) wird vor Schritt b), Schritt b) vor Schritt c), und Schritt c) vor Schritt d) durchgeführt. Der Vorbehandlungsschritt wird vorzugsweise vor Schritt a) durchgeführt. Es ist aber grundsätzlich auch möglich, die Schritte in einer anderen Reihenfolge durchzuführen. Gemäß einer bevorzugten Ausführungsform der Erfindung umfasst das erfindungsgemäße Verfahren keine weiteren Schritte, insbesondere umfasst das erfindungsgemäße Verfahren zwischen den Schritten a) und b), den Schritten b) und c) und/oder den Schritten c) und d) keinen weiteren Verfahrensschritt.

Gegenstand der Erfindung ist ferner die Verwendung eines erfindungsgemäßen Entlackungsmittels zum Entlacken von Gegenständen. Für das Entlackungsmittel der erfindungsmäßigen Verwendung gilt das vorstehend zum erfindungsgemäßen Entlackungsmittel Gesagte analog.

Bei den zu entlackenden Gegenständen kann es sich beispielsweise um einen metallischer Gegenstand handeln, insbesondere einen Gegenstand aus einem Material ausgewählt aus Aluminium, Magnesium, Stahl, verzinktem Stahl sowie Legierungen davon. Das erfindungsgemäße Verfahren sowie das erfindungsgemäße Entlackungsmittel eignen sich besonders gut zur Entlackung derartiger metallischer Gegenstände. Auch mehrschichtige Lacke auf einem solchen Gegenstand können vollständig, effizient und schnell entfernt werden.

Gemäß einer bevorzugten Ausführungsform der Erfindung handelt es sich bei dem zu entlackenden Gegenstand um eine Fahrzeugfelge, ein Karosserie- oder Chassisteil für Fahrzeuge, einen Haken, einen Magneten, Federstahl oder ein Computergehäuse.

Das Prinzip der Erfindung soll im Folgenden anhand von den Erfindungsgegenstand nicht einschränkenden Beispielen näher erläutert werden.

### Ausführungsbeispiele

### Beispiel 1 (Herstellung eines Entlackungsmittels)

Zur Herstellung eines Entlackungsmittels wurden 800 g 3-Phenoxy-1,2-propandiol und 200 g Milchsäure bei Raumtemperatur unter Rühren in 3000 g Wasser gelöst. Es wurde eine milchige Emulsion erhalten.

### Beispiel 2 (Herstellung eines Entlackungsmittels)

Zur Herstellung eines Entlackungsmittels wurden 1000 g Phenoxyethanol, 300 g Milchsäure und 100 g Citronensäure bei Raumtemperatur unter Rühren in 2600 g Wasser gelöst. Es wurde eine milchige, leicht gelbliche Emulsion erhalten.

### Beispiel 3 (Herstellung eines Entlackungsmittels)

Zur Herstellung eines Entlackungsmittels wurden 700 g 1-Phenoxy-2-propanol, 300 g Milchsäure und 20 g 1-Methyl-1H-benzotriazol bei Raumtemperatur unter Rühren in 2980 g Wasser gelöst. Es wurde eine milchige, leicht gelbliche Emulsion erhalten.

### Beispiel 4 (Herstellung eines Entlackungsmittels)

Zur Herstellung eines Entlackungsmittels wurden 800 g Phenoxyethanol, 200 g Milchsäure, 20 g Benzotriazol und 20 g Salicylsäure bei Raumtemperatur unter Rühren in 2960 g Wasser gelöst. Es wurde eine milchige, leicht gelbliche Emulsion erhalten.

### Beispiel 5 (Herstellung eines Entlackungsmittels)

Zur Herstellung eines Entlackungsmittels wurden 650 g Phenoxyethanol, 150 g Milchsäure, 5 g Benzotriazol und 10 g Methansulfonsäure bei Raumtemperatur unter

Rühren in 3185 g Wasser gelöst. Es wurde eine milchige, leicht gelbliche Emulsion erhalten.

### Beispiel 6 (Entlackungsverfahren)

Eine mit einem Zwei-Komponenten-Lacksystem lackierte Fahrzeugfelge aus Aluminium wurde bei 75 °C für 120 min mit einem nach Beispiel 2 hergestellten Entlackungsmittel bei einem Sprühdruck von 1 bar besprüht. Im zweiten Schritt wurde die Felge bei 150 °C für 90 min bei einem Sprühdruck von 0,7 bar mit einem zweiten Entlackungsmittel, bestehend aus 98 Gew.% Polyethylenglycol 200, und 2 Gew.% Natriummethanolat, besprüht. Im dritten Behandlungsschritt wurde die Felge für 10 min mit Wasser bei Raumtemperatur gespült. Nach den drei Behandlungsschritten war die Felge vollständig entlackt.

### Beispiel 7 (Entlackungsverfahren)

Eine mit einem Pulverlack lackierte Fahrzeugfelge aus Aluminium wurde in einem Vorbehandlungsschritt bei Raumtemperatur für 5 min in 95 Gew.% Schwefelsäure getaucht. Im zweiten Schritt wurde die Felge bei 80 °C für 90 min mit einem nach Beispiel 2 hergestellten Entlackungsmittel bei einem Sprühdruck von 1 bar besprüht. Im dritten Schritt wurde die Felge bei 100 °C für 90 min bei einem Sprühdruck von 0,7 bar mit einem zweiten Entlackungsmittel, bestehend aus 99 Gew.% Diethylenglycol und 1 Gew.% Kaliumhydroxid besprüht. Im vierten Behandlungsschritt wurde die Felge für 10 min mit Wasser bei Raumtemperatur gespült. Im fünften Behandlungsschritt wurde die Felge für 10 min bei 40 °C mit einer wässrigen Lösung enthaltend 3 Gew.% Phosphorsäure bei einem Sprühdruck von 1 bar besprüht. Nach den fünf Behandlungsschritten war die Felge vollständig entlackt.

### Beispiel 8 (Entlackungsverfahren)

Eine mit einer kathodische Tauchlackierung lackierte Fahrzeugfelge aus Aluminium wurde im ersten Schritt bei 80 °C für 60 min mit einem nach Beispiel 4 hergestellten Entlackungsmittel bei einem Sprühdruck von 1 bar besprüht. Im zweiten Schritt wurde die Felge bei 80 °C für 15 min bei einem Sprühdruck von 0,7 bar mit einem zweiten Entlackungsmittel, bestehend aus 99 Gew.% Diethylenglycol und 1 Gew.% Kaliumhydroxid, besprüht. Nach den beiden Behandlungsschritten war die Felge bereits vollständig entlackt.

### Beispiel 9

Eine mit einem Mischlack lackierte Fahrzeugfelge aus Aluminium wurde bei 80 °C für 100 min mit einem nach Beispiel 5 hergestellten Entlackungsmittel bei einem Sprühdruck von 1 bar besprüht. Im zweiten Schritt wurde die Felge bei 120 °C für 60 min bei einem Sprühdruck von 0,7 bar mit einem zweiten Entlackungsmittel, bestehend aus 98 Gew.% Polyethylenglycol 200, und 2 Gew.% Natriummethanolat, besprüht. Im dritten Behandlungsschritt wurde die Felge für 10 min mit Wasser bei Raumtemperatur gespült. Nach den drei Behandlungsschritten war die Felge vollständig entlackt.

## Patentansprüche

1. Entlackungsmittel zum Entlacken von Gegenständen, **dadurch gekennzeichnet, dass** das Entlackungsmittel mindestens a) einen substituierten oder unsubstituierten Hydroxyalkyl-Aryl-Ether mit 7 bis 20 Kohlenstoffatomen, wobei der Hydroxyalkyl-Rest des Hydroxyalkyl-Aryl-Ethers ausgewählt ist aus Hydroxymethyl, Hydroxyethyl und Hydroxypropyl, sowie Mischungen davon, b) Säure sowie c) Wasser enthält, **dadurch gekennzeichnet, dass** das Entlackungsmittel einen pH-Wert von 0 bis 7 aufweist.

2. Entlackungsmittel nach Anspruch 1, **dadurch gekennzeichnet, dass** das Entlackungsmittel, jeweils bezogen auf das Gesamtgewicht des Entlackungsmittels,
a) 5 bis 30 Gew.%, insbesondere 10 bis 25 Gew.% oder 15 bis 20 Gew.%, Hydroxyalkyl-Aryl-Ether,
b) 1 bis 15 Gew.%, insbesondere 3 bis 12 Gew.% oder 5 bis 10 Gew.%, Säure, und
c) 52,5 bis 94 Gew.%, insbesondere 61 bis 87 Gew.% oder 68,5 bis 80 Gew.%, Wasser
enthält.

3. Entlackungsmittel nach Anspruch 1 oder 2, **dadurch gekennzeichnet, dass** die Säure eine organische Säure ist, insbesondere eine organische Säure, die mindestens eine Carboxylgruppe aufweist, deren pKs-Wert 0 bis 6, insbesondere 1 bis 5 oder 2 bis 4, beträgt und/oder eine Sulfonsäure ist,
und/oder dass die Säure eine Hydroxy-Carbonsäure und/oder Dicarbonsäure und/oder Sulfonsäure, insbesondere eine Hydroxy-Carbonsäure und/oder Dicarbonsäure mit 2 bis 12 Kohlenstoffatomen, insbesondere 2 bis 10, 3 bis 6 oder 6 bis 8 Kohlenstoffatomen und/oder eine Sulfonsäure ist,
und/oder dass die Säure ausgewählt ist aus Milchsäure, Citronensäure, Salicylsäure, Ethandisäure, Propandisäure und Sulfonsäure, sowie Mischungen davon, insbesondere Milchsäure, einer Mischung aus Milchsäure und Citronensäure, einer Mischung aus Milchsäure und Salicylsäure, einer Mischung aus Milchsäure, Citronensäure und Salicylsäure und einer Mischung aus Milchsäure und Sulfonsäure, insbesondere einer Mischung aus Milchsäure und Sulfonsäure.

4. Entlackungsmittel nach Anspruch 3, **dadurch gekennzeichnet, dass** die Sulfonsäure ausgewählt ist aus Benzolsulfonsäure, Methansulfonsäure und Toluol-4-sulfonsäure, sowie Mischungen davon, insbesondere Methansulfonsäure,
und/oder dass die Sulfonsäure in einer Menge von 0,01 bis 5 Gew.%, insbesondere 0,05 bis 3 Gew.% oder 0,1 bis 1 Gew.%, jeweils bezogen auf das Gesamtgewicht des Entlackungsmittels, im Entlackungsmittel enthalten ist.

5. Entlackungsmittel nach einem der vorstehenden Ansprüche, **dadurch gekennzeichnet, dass** der Hydroxyalkyl-Aryl-Ether 8 bis 15, insbesondere 8 bis 12 oder 8 Kohlenstoffatome, aufweist,
und/oder dass der Hydroxyalkyl-Rest des Hydroxyalkyl-Aryl-Ethers ein Monohydroxyalkyl und/oder Dihydroxyalkyl ist,
und/oder dass der Hydroxyalkyl-Rest des Hydroxyalkyl-Aryl-Ethers ausgewählt ist aus Hydroxyethyl,
und/oder dass der Aryl-Rest des Hydroxyalkyl-Aryl-Ethers ausgewählt ist aus Phenyl, Naphthyl und Benzyl, sowie Mischungen davon, insbesondere Phenyl, und/oder dass der Hydroxyalkyl-Aryl-Ether im Wesentlichen Phenoxyethanol ist.

6. Entlackungsmittel nach einem der vorstehenden Ansprüche **dadurch gekennzeichnet, dass** das Entlackungsmittel mindestens einen Korrosionsinhibitor in einer Menge von 0,1 bis 1 Gew.%, insbesondere 0,2 bis 0,8 Gew.% oder 0,4 bis 0,6 Gew.%, jeweils bezogen auf das Gesamtgewicht des Entlackungsmittels, enthält,
und worin optional der Korrosionsinhibitor ausgewählt ist aus Benzotriazol, N,N'-Diethylthioharnstoff, 1H-Imdiazol-1-ethanol und 1-Methyl-1H-benzotriazol, sowie Mischungen davon, insbesondere Benzotriazol.

7. Entlackungsmittel nach einem der vorstehenden Ansprüche, **dadurch gekennzeichnet, dass** das Entlackungsmittel 0,01 bis 20 Gew.% eines aus Säure und Hydroxyalkyl-Aryl-Ether bildbaren Esters, insbesondere 0,1 bis 15 Gew.% oder 0,5 bis 10 Gew.%, jeweils bezogen auf das Gesamtgewicht des Entlackungsmittels, enthält.

8. Entlackungsmittel nach einem der vorstehenden Ansprüche, **dadurch gekennzeichnet, dass** das Entlackungsmittel einen pH-Wert von 0,5 bis 4 oder von 1 bis 3 aufweist,
und/oder dass das Entlackungsmittel bei 23 °C flüssig ist.

9. Entlackungsmittel nach einem der vorstehenden Ansprüche, **dadurch gekennzeichnet, dass** das Entlackungsmittel, jeweils bezogen auf das Gesamtgewicht des Entlackungsmittels, 5 bis 30 Gew.%, insbesondere 10 bis 25 Gew.% oder 15 bis 20 Gew.%, Hydroxyalkyl-Aryl-Ether, enthält,
und/oder dass das Entlackungsmittel, jeweils bezogen auf das Gesamtgewicht des Entlackungsmittels, 1 bis 15 Gew.%, insbesondere 3 bis 12 Gew.% oder 5 bis 10 Gew.%, Säure, enthält,
und/oder dass das Entlackungsmittel, jeweils bezogen auf das Gesamtgewicht des Entlackungsmittels, 52,5 bis 94 Gew.%, insbesondere 61 bis 87 Gew.% oder 68,5 bis 80 Gew.%, Wasser, enthält.

10. Entlackungsmittel nach einem der vorstehenden Ansprüche zum Entlacken von Gegenständen, **dadurch gekennzeichnet, dass** das Entlackungsmittel herstellbar ist durch Mischen von mindestens einer Säure, eines substituierten oder unsubstituierten Hydroxyalkyl-Aryl-Ether mit 7 bis 20 Kohlenstoffatomen und Wassers,
worin optional das Entlackungsmittel, die Säure und/oder der Hydroxyalkyl-Aryl-Ether wie in einem der Ansprüche 2 bis 9 definiert ist.

11. Verfahren zum Entlacken von Gegenständen, mindestens umfassend folgenden Schritt:
a) Inkontaktbringen der zu entlackenden Oberfläche des Gegenstands mit einem ersten Entlackungsmittel gemäß einem der Ansprüche 1 bis 10, und worin optional das Inkontaktbringen in Schritt a) bei Temperaturen von 75 °C bis 95 °C, insbesondere von 75 °C bis 90 °C oder 80 °C bis 85 °C erfolgt.

12. Verfahren nach Anspruch 11, **dadurch gekennzeichnet, dass** das Verfahren zusätzlich folgenden Schritt umfasst:
b) Inkontaktbringen der zu entlackenden Oberfläche des Gegenstands mit einem zweiten Entlackungsmittel, wobei das zweite Entlackungsmittel einen Glycolether enthält,
und worin optional das zweite Entlackungsmittel in Schritt b) Glycolether in einer Menge von 50 bis 99,9 Gew.%, insbesondere 90 bis 99,8 Gew.% oder 97 bis 99,7 Gew.%, jeweils bezogen auf das Gesamtgewicht des zweiten Entlackungsmittels, enthält,
und/oder worin optional das zweite Entlackungsmittel in Schritt b) weiterhin Lauge in einer Menge von 0,1 bis 5 Gew.%, insbesondere 0,3 bis 3 Gew.% oder 0,5 bis 1,5 Gew.%, jeweils bezogen auf das Gesamtgewicht des zweiten Entlackungsmittels, enthält,
und/oder worin optional das das Inkontaktbringen in Schritt b) bei Temperaturen von 50 bis 200 °C, insbesondere 70 bis 170 °C und 80 bis 150 °C erfolgt.

13. Verfahren nach Anspruch 12, **dadurch gekennzeichnet, dass** der Glycolether ausgewählt ist aus Diethylenglycol, Triethylenglycol, Polyethylenglycol und Polypropylenglycol, sowie Mischungen davon, insbesondere Diethylenglycol, und/oder dass die Lauge ausgewählt ist aus Kaliumhydroxid, Natriumhydroxid, Ammoniumhydroxid, Natriummethanolat, Kaliummethanolat, Natriumethanolat und Kaliumethanolat, sowie Mischungen davon, insbesondere aus Kaliumhydroxid und Natriummethanolat, sowie Mischungen davon.

14. Verfahren nach einem der Ansprüche 11 bis 13, **dadurch gekennzeichnet, dass** das Verfahren zusätzlich oder anstelle von Schritt b) folgenden Schritt umfasst:
c) Spülen des gemäß Schritt a) und/oder b) behandelten Gegenstands mit Wasser,
und/oder dass das Verfahren zusätzlich oder anstelle von Schritt b) und/oder Schritt c) folgenden Schritt umfasst:
d) Inkontaktbringen der zu entlackenden Oberfläche des Gegenstands mit einer wässrigen Lösung enthaltend Phosphorsäure in einer Menge von 0,5 bis 10 Gew.%, insbesondere 1 bis 6 Gew.% oder 2 bis 4 Gew.%, jeweils bezogen auf das Gesamtgewicht der wässrigen Lösung,
und/oder dass das Verfahren zusätzlich folgenden Vorbehandlungsschritt umfasst:
Inkontaktbringen der zu entlackenden Oberfläche des Gegenstands mit einer Lösung enthaltend Schwefelsäure,
worin optional die Lösung Schwefelsäure in einer Menge von 80 bis 99,9 Gew.%, insbesondere 88 bis 99,5 Gew.% oder 92 bis 98,5 Gew.%, bezogen auf die Gesamtmenge der Lösung, enthält, und/oder worin optional die Vorbehandlung vor Schritt a) durchgeführt wird.

15. Verfahren nach einem der Ansprüche 11 bis 14, **dadurch gekennzeichnet, dass** in mindestens einem Verfahrensschritt, insbesondere in sämtlichen Verfahrensschritten, das Inkontaktbringen mittels eines Sprühverfahrens erfolgt, worin optional in mindestens einem Verfahrensschritt das Sprühverfahren bei einem Sprühdruck von 0,01 bis 10 bar, insbesondere von 0,02 bis 8 bar, von 0,03 bis 5 bar, von 0,05 bis 1 bar oder von 0,1 bis 0,7 bar, erfolgt,
und/oder dass in mindestens einem Verfahrensschritt, insbesondere im Vorbehandlungsschritt gemäß Anspruch 14, das Inkontaktbringen in einem Tauchverfahren erfolgt.

16. Verwendung eines Entlackungsmittels nach einem der Ansprüche 1 bis 10 zum Entlacken von Gegenständen.

17. Verwendung nach Anspruch 16, **dadurch gekennzeichnet, dass** der Gegenstand ein metallischer Gegenstand, insbesondere ein Gegenstand aus einem Material ausgewählt aus Aluminium, Magnesium, Stahl, verzinktem Stahl sowie Legierungen davon, ist,
und/oder dass der Gegenstand eine Fahrzeugfelge, ein Karosserie- oder Chassisteil für Fahrzeuge, ein Haken, ein Magnet, Federstahl oder ein Computergehäuse ist.

## Claims

1. Paint stripping agent for stripping paint from objects,
**characterized in that** the paint stripping agent contains at least a) a substituted or unsubstituted hydroxyalkyl aryl ether having 7 to 20 carbon atoms, the hydroxyalkyl functional group of the hydroxyalkyl aryl ether being selected from hydroxymethyl, hydroxyethyl and hydroxypropyl, and mixtures thereof, b) acid, and c) water, **characterized in that** the paint stripping agent has a pH of 0 to 7.

2. Paint stripping agent according to claim 1, **characterized in that** the paint stripping agent, in each case based on the total weight of the paint stripping agent, contains
a) 5 to 30 wt.%, in particular 10 to 25 wt.% or 15 to 20 wt.%, hydroxyalkyl aryl ether,
b) 1 to 15 wt.%, in particular 3 to 12 wt.% or 5 to 10 wt.%, acid, and
c) 52.5 to 94 wt.%, in particular 61 to 87 wt.% or 68.5 to 80 wt.% water.

3. Paint stripping agent according to either claim 1 or claim 2,
**characterized in that** the acid is an organic acid, in particular an organic acid having at least one carboxyl group, the pKa of which is 0 to 6, in particular 1 to 5 or 2 to 4, and/or is a sulfonic acid,
and/or **in that** the acid is a hydroxy carboxylic acid and/or dicarboxylic acid
and/or sulfonic acid, in particular a hydroxy carboxylic acid and/or
dicarboxylic acid having 2 to 12 carbon atoms, in particular 2 to 10, 3 to 6 or 6 to 8 carbon atoms, and/or is a sulfonic acid,
and/or **in that** the acid is selected from lactic acid, citric acid, salicylic acid, ethanedioic acid, propanedioic acid and sulfonic acid, and mixtures thereof, in particular lactic acid, a mixture of lactic acid and citric acid, a mixture of lactic acid and salicylic acid, a mixture of lactic acid, citric acid and salicylic acid, and a mixture of lactic acid and sulfonic acid, in particular a mixture of lactic acid and sulfonic acid.

4. Paint stripping agent according to claim 3, **characterized in that** the sulfonic acid is selected from benzenesulfonic acid, methanesulfonic acid and toluene-4-sulfonic acid, and mixtures thereof, in particular methanesulfonic acid,
and/or **in that** the sulfonic acid is contained in the paint stripping agent in an amount of from 0.01 to 5 wt.%, in particular 0.05 to 3 wt.% or 0.1 to 1 wt.%, in each case based on the total weight of the paint stripping agent.

5. Paint stripping agent according to any of the preceding claims, **characterized in that** the hydroxyalkyl aryl ethers have 8 to 15, in particular 8 to 12 or 8 carbon atoms,
and/or **in that** the hydroxyalkyl functional group of the hydroxyalkyl aryl ether is a monohydroxyalkyl and/or a dihydroxyalkyl,
and/or **in that** the hydroxyalkyl functional group of the hydroxyalkyl aryl ether is selected from hydroxyethyl,
and/or that the aryl functional group of the hydroxyalkyl aryl ether is selected from phenyl, naphthyl and benzyl and mixtures thereof, in particular phenyl, and/or **in that** the hydroxyalkyl aryl ether is substantially phenoxyethanol.

6. Paint stripping agent according to any of the preceding claims **characterized in that** the paint stripping agent contains at least one corrosion inhibitor in an amount of from 0.1 to 1 wt.%, in particular 0.2 to 0.8 wt.% or 0.4 to 0.6 wt.%, in each case based on the total weight of the paint stripping agent,
and wherein the corrosion inhibitor is optionally selected from benzotriazole, N,N'-diethylthiourea, 1H-imidazole-1-ethanol and 1-methyl-1H-benzotriazole and mixtures thereof, in particular benzotriazole.

7. Paint stripping agent according to any of the preceding claims, **characterized in that** the paint stripping agent contains 0.01 to 20 wt.% of an ester which can be formed from acid and hydroxyalkyl aryl ether, in particular 0.1 to 15 wt.% or 0.5 to 10 wt.%, in each case based on the total weight of the paint stripping agent.

8. Paint stripping agent according to any of the preceding claims, **characterized in that** the paint stripping agent has a pH of 0.5 to 4 or 1 to 3, and/or **in that** the paint stripping agent is liquid at 23°C.

9. Paint stripping agent according to any of the preceding claims, **characterized in that** the paint stripping agent, in each case based on the total weight of the paint stripping agent, contains 5 to 30 wt.%, in particular 10 to 25 wt.% or 15 to 20 wt.%, hydroxyalkyl aryl ether,
and/or **in that** the paint stripping agent contains, in each case based on the total weight of the paint stripping agent, 1 to 15 wt.%, in particular 3 to 12 wt.% or 5 to 10 wt.%, acid,
and/or **in that** the paint stripping agent contains, in each case based on the total weight of the paint stripping agent, 52.5 to 94 wt.%, in particular 61 to 87 wt.% or 68.5 to 80 wt.%, water.

10. Paint stripping agent according to any of the preceding claims for stripping paint from objects, **characterized in that** the paint stripping agent can be prepared by mixing at least one acid, a substituted or unsubstituted hydroxyalkyl aryl ether having 7 to 20 carbon atoms, and water,
wherein the paint stripping agent, the acid and/or the hydroxyalkyl aryl ether is optionally as defined in any of claims 2 to 9.

11. Method for stripping paint from objects, at least comprising the following step:
a) bringing the surface of the object that is to be stripped of paint into contact with a first paint stripping agent according to any of claims 1 to 10, wherein the contact in step a) is optionally brought about at temperatures of 75°C to 95°C, in particular 75°C to 90°C or 80°C to 85°C.

12. Method according to claim 11, **characterized in that** the method additionally comprises the following step:
b) bringing the surface of the object that is to be stripped of paint into contact with a second paint stripping agent, the second paint stripping agent containing a glycol ether,
wherein the second paint stripping agent in step b) optionally contains glycol ether in an amount of from 50 to 99.9 wt.%, in particular 90 to 99.8 wt.% or 97 to 99.7 wt.%, in each case based on the total weight of the second paint stripping agent, and/or wherein the second paint stripping agent in step b) optionally further contains lye in an amount of from 0.1 to 5 wt.%, in particular 0.3 to 3 wt.% or 0.5 to 1.5 wt.%, in each case based on the total weight of the second paint stripping agent, and/or wherein the contact in step b) is optionally brought about at temperatures of 50 to 200°C, in particular 70 to 170°C and 80 to 150°C.

13. Method according to claim 12, **characterized in that** the glycol ether is selected from diethylene glycol, triethylene glycol, polyethylene glycol and polypropylene glycol, and mixtures thereof, in particular diethylene glycol, and/or in that the lye is selected from potassium hydroxide, sodium hydroxide, ammonium hydroxide, sodium methoxide, potassium methoxide, sodium ethoxide and potassium ethoxide and mixtures thereof, in particular from potassium hydroxide and sodium methoxide and mixtures thereof.

14. Method according to any of claims 11 to 13, **characterized in that** the method additionally or instead of step b) comprises the following step:
c) rinsing the object treated according to step a) and/or b) with water,
and/or **in that** the method additionally or instead of step b) and/or step c) comprises the following step:
d) bringing the surface of the object that is to be stripped of paint into contact with an aqueous solution containing phosphoric acid in an amount of from 0.5 to 10 wt.%, in particular 1 to 6 wt.% or 2 to 4 wt.%, in each case based on the total weight of the aqueous solution,
and/or **in that** the method additionally comprises the following pretreatment step:
bringing the surface of the object that is to be stripped of paint into contact with a solution containing sulfuric acid,
wherein the solution optionally contains sulfuric acid in an amount of from 80 to 99.9 wt.%, in particular 88 to 99.5 wt.% or 92 to 98.5 wt.%, based on the total amount of the solution, and/or wherein the pretreatment is optionally carried out before step a).

15. Method according to any of claims 11 to 14, **characterized in that** in at least one method step, in particular in all of the method steps, the contact is brought about by means of a spraying process,
wherein, in at least one method step, the spraying process is optionally carried out at a spraying pressure of from 0.01 to 10 bar, in particular 0.02 to 8 bar, 0.03 to 5 bar, 0.05 to 1 bar or 0.1 to 0.7 bar,
and/or **in that** in at least one method step, in particular in the pretreatment step according to claim 14, the contact brought about in a dipping process.

16. Use of a paint stripping agent according to any of claims 1 to 10 for stripping paint from objects.

17. Use according to claim 16, **characterized in that** the object is a metal object, in particular an object made of a material selected from aluminum, magnesium, steel, galvanized steel and alloys thereof,
and/or **in that** the object is a vehicle rim, a body part or chassis part for vehicles, a hook, a magnet, spring steel or a computer housing.

## Revendications

1. Décapant pour le décapage d'objets, **caractérisé en ce que** le décapant contient au moins a) un éther aryle hydroxyalkyle substitué ou non substitué comportant 7 à 20 atomes de carbone, dans lequel le radical hydroxyalkyle de l'éther aryle hydroxyalkyle est choisi parmi hydroxyméthyle, hydroxyéthyle et hydroxypropyle, ainsi que des mélanges de ceux-ci, b) des acides ainsi que c) de l'eau, **caractérisé en ce que** le décapant présente un pH de 0 à 7.

2. Décapant selon la revendication 1, **caractérisé en ce que** le décapant contient, respectivement par rapport au poids total du décapant,
a) 5 à 30 % en poids, en particulier 10 à 25 % en poids ou 15 à 20 % en poids, d'éther aryle hydroxyalkyle,
b) 1 à 15 % en poids, en particulier 3 à 12 % en poids ou 5 à 10 % en poids, d'acide, et
c) 52,5 à 94 % en poids, en particulier 61 à 87 % en poids ou 68,5 à 80 % en poids, d'eau.

3. Décapant selon la revendication 1 ou 2, **caractérisé en ce que** l'acide est un acide organique, en particulier un acide organique qui présente au moins un groupe carboxyle dont le pKa est de 0 à 6, en particulier de 1 à 5 ou de 2 à 4, et/ou est un acide sulfonique,
**et/ou en ce que** l'acide est un acide hydroxycarboxylique et/ou un acide dicarboxylique
et/ou un acide sulfonique, en particulier un acide hydroxycarboxylique et/ou
un acide dicarboxylique comportant 2 à 12 atomes de carbone, en particulier 2 à 10, 3 à 6 ou 6 à 8 atomes de carbone, et/ou un acide sulfonique,
**et/ou en ce que** l'acide est choisi parmi acide lactique, acide citrique, acide salicylique, diacide éthanoïque, diacide propanoïque et acide sulfonique, ainsi que des mélanges de ceux-ci, en particulier l'acide lactique, un mélange d'acide lactique et d'acide citrique, un mélange d'acide lactique et d'acide salicylique, un mélange d'acide lactique, d'acide citrique et d'acide salicylique et un mélange d'acide lactique et d'acide sulfonique, en particulier un mélange d'acide lactique et d'acide sulfonique.

4. Décapant selon la revendication 3, **caractérisé en ce que** l'acide sulfonique est choisi parmi acide benzènesulfonique, acide méthanesulfonique et acide toluène-4-sulfonique, ainsi que des mélanges de ceux-ci, en particulier l'acide méthanesulfonique,
**et/ou en ce que** l'acide sulfonique est contenu dans le décapant en une quantité de 0,01 à 5 % en poids, en particulier de 0,05 à 3 % en poids ou de 0,1 à 1 % en poids, respectivement par rapport au poids total du décapant.

5. Décapant selon l'une quelconque des revendications précédentes, **caractérisé en ce que** l'éther aryle hydroxyalkyle présente 8 à 15, en particulier 8 à 12 ou 8 atomes de carbone,
**et/ou en ce que** le radical hydroxyalkyle de l'éther aryle hydroxyalkyle est un monohydroxyalkyle et/ou un dihydroxyalkyle,
**et/ou en ce que** le radical hydroxyalkyle de l'éther aryle hydroxyalkyle est choisi parmi hydroxyéthyle,
**et/ou en ce que** le radical aryle de l'éther aryle hydroxyalkyle est choisi parmi phényle, naphtyle et benzyle, ainsi que des mélanges de ceux-ci, en particulier le phényle, **et/ou en ce que** l'éther aryle hydroxyalkyle est sensiblement le phénoxyéthanol.

6. Décapant selon l'une quelconque des revendications précédentes, **caractérisé en ce que** le décapant contient au moins un inhibiteur de corrosion en une quantité de 0,1 à 1 % en poids, en particulier de 0,2 à 0,8 % en poids ou de 0,4 à 0,6 % en poids, respectivement par rapport au poids total du décapant,
et dans lequel l'inhibiteur de corrosion est éventuellement choisi parmi benzotriazole, N,N'-diéthylthiourée, 1H-imdiazol-1-éthanol et 1-méthyl-1H-benzotriazole, ainsi que des mélanges de ceux-ci, en particulier le benzotriazole.

7. Décapant selon l'une quelconque des revendications précédentes, **caractérisé en ce que** le décapant contient 0,01 à 20 % en poids d'un ester pouvant être formé à partir d'acide et d'éther aryle hydroxyalkyle, en particulier 0,1 à 15 % en poids ou 0,5 à 10 % en poids, respectivement par rapport au poids total du décapant.

8. Décapant selon l'une quelconque des revendications précédentes, **caractérisé en ce que** le décapant présente un pH de 0,5 à 4 ou de 1 à 3, **et/ou en ce que** le décapant est liquide à 23 °C.

9. Décapant selon l'une quelconque des revendications précédentes, **caractérisé en ce que** le décapant contient, respectivement par rapport au poids total du décapant, 5 à 30 % en poids, en particulier 10 à 25 % en poids ou 15 à 20 % en poids, d'éther aryle hydroxyalkyle,
**et/ou en ce que** le décapant contient, respectivement par rapport au poids total du décapant, 1 à 15 % en poids, en particulier 3 à 12 % en poids ou 5 à 10 % en poids, d'acide,
**et/ou en ce que** le décapant contient, respectivement par rapport au poids total du décapant, 52,5 à 94 % en poids, en particulier 61 à 87 % en poids ou 68,5 à 80 % en poids, d'eau.

10. Décapant selon l'une des revendications précédentes pour le décapage d'objets, **caractérisé en ce que** le décapant peut être fabriqué par mélange d'au moins un acide, d'un éther aryle hydroxyalkyle substitué ou non substitué comportant 7 à 20 atomes de carbone et d'eau,
dans lequel, éventuellement, le décapant, l'acide et/ou l'éther aryle hydroxyalkyle sont définis tel que dans l'une des revendications 2 à 9.

11. Procédé pour le décapage d'objets, comprenant au moins l'étape suivante :
a) mise en contact de la surface de l'objet à décaper avec un premier décapant selon l'une des revendications 1 à 10, et dans lequel, éventuellement, la mise en contact à l'étape a) est effectuée à des températures de 75 °C à 95 °C, en particulier de 75 °C à 90 °C ou de 80 °C à 85 °C.

12. Procédé selon la revendication 11, **caractérisé en ce que** le procédé comprend en outre l'étape suivante :
b) mise en contact de la surface de l'objet à décaper avec un second décapant, dans lequel le second décapant contient un éther de glycol,
et dans lequel, éventuellement, le second décapant à l'étape b) contient l'éther de glycol en une quantité de 50 à 99,9 % en poids, en particulier de 90 à 99,8 % en poids ou de 97 à 99,7 % en poids, respectivement par rapport au poids total du second décapant, et/ou dans lequel, éventuellement, le second décapant à l'étape b) contient en outre de la lessive en une quantité de 0,1 à 5 % en poids, en particulier de 0,3 à 3 % en poids ou de 0,5 à 1,5 % en poids, respectivement par rapport au poids total du second décapant, et/ou dans lequel, éventuellement, la mise en contact à l'étape b) est effectuée à des températures de 50 à 200 °C, en particulier de 70 à 170 °C et de 80 à 150 °C.

13. Procédé selon la revendication 12, **caractérisé en ce que** l'éther de glycol est choisi parmi diéthylène glycol, triéthylène glycol, polyéthylène glycol et polypropylène glycol, ainsi que des mélanges de ceux-ci, en particulier le diéthylène glycol, **et/ou en ce que** la lessive est choisie parmi hydroxyde de potassium, hydroxyde de sodium, hydroxyde d'ammonium, méthanolate de sodium, méthanolate de potassium, éthanolate de sodium et éthanolate de potassium, ainsi que des mélanges de ceux-ci, en particulier parmi hydroxyde de potassium et méthanolate de sodium, ainsi que des mélanges de ceux-ci.

14. Procédé selon l'une des revendications 11 à 13, **caractérisé en ce que** le procédé comprend en outre ou, au lieu de l'étape b), l'étape suivante :
c) rinçage, avec de l'eau, de l'objet traité selon l'étape a) et/ou b),
**et/ou en ce que** le procédé comprend en outre ou, au lieu de l'étape b) et/ou de l'étape c), l'étape suivante :
d) mise en contact de la surface de l'objet à décaper avec une solution aqueuse contenant de l'acide phosphorique en une quantité de 0,5 à 10 % en poids, en particulier de 1 à 6 % en poids ou de 2 à 4 % en poids, respectivement par rapport au point total de la solution aqueuse,
**et/ou en ce que** le procédé comprend en outre l'étape de prétraitement suivante :
mise en contact de la surface de l'objet à décaper avec une solution contenant de l'acide sulfurique,
dans lequel, éventuellement, la solution contient de l'acide sulfurique en une quantité de 80 à 99,9 % en poids, en particulier de 88 à 99,5 % en poids ou de 92 à 98,5 % en poids, par rapport à la quantité totale de la solution, et/ou dans lequel, éventuellement, le prétraitement est réalisé avant l'étape a).

15. Procédé selon l'une des revendications 11 à 14, **caractérisé en ce que,** dans au moins une étape de procédé, en particulier dans toutes les étapes de procédé, la mise en contact est effectuée au moyen d'un procédé de pulvérisation,
dans lequel, éventuellement, dans au moins une étape de procédé, le procédé de pulvérisation est effectué avec une pression de pulvérisation de 0,01 à 10 bar, en particulier de 0,02 à 8 bar, de 0,03 à 5 bar, de 0,05 à 1 bar ou de 0,1 à 0,7 bar,
**et/ou en ce que,** dans au moins une étape de procédé, en particulier dans l'étape de prétraitement selon la revendication 14, la mise en contact est effectuée dans un procédé de trempage.

16. Utilisation d'un décapant selon l'une des revendications 1 à 10 pour le décapage d'objets.

17. Procédé selon la revendication 16, **caractérisé en ce que** l'objet est un objet métallique, en particulier un objet fabriqué à partir d'un matériau choisi parmi aluminium, magnésium, acier, acier galvanisé ainsi que des alliages de ceux-ci,
**et/ou en ce que** l'objet est une jante de roue de véhicule, une pièce de carrosserie ou de châssis pour véhicules, un crochet, un aimant, un acier à ressort ou un boîtier d'ordinateur.
